# EUROPEAN PATENT APPLICATION

(11) **EP 1 455 293 A2**
(43) Date of publication of application: **08.09.2004**
(21) Application number: 04004746.6
(22) Date of filing: 01.03.2004
(51) Int. Cl.: G06F 17/60, H04M 1/70, H04M 3/00

(54) **Sales system, sales management terminal and program for selling goods aboard train**

(30) Priority: 04.03.2003 JP 2003056920
(71) Applicant: NEC CORPORATION, Tokyo (JP)
(72) Inventor: Matsuura, Toshihiro, Kakegawa-shi Shizuoka (JP)
(74) Representative: Glawe, Delfs, Moll & Partner

(57) **Abstract**

A user mobile terminal uses an in-train merchandise purchase program to have ordering information entered. A merchandise management terminal in the train receives that ordering information and, if the payment method is cash payment, transfers the ordering information to a salesperson terminal. The merchandise management terminal discerns the payment method from the ordering information and, if the payment method is any othermethodthancashpayment, requests a merchandise management server 7 for authentication and, if authentication is given, transfers the ordering information to the salesperson terminal. The merchandise management server, having received a notice of sale completion from the salesperson terminal via the merchandise management terminal, settles the account with a passenger requiring any other payment method than cash payment.

## Description

### BACKGROUND OF THE INVENTION

### 1. Field of the Invention

The present invention relates to a system, method, management terminal and program for selling merchandise aboard a train, and more particularly to a sales system, sales method, sales. management terminal and program for enabling train passengers to order merchandise by using their respective mobile terminals.

### 2. Description of the Related Art

According to the conventional practice, when a salesperson aboard a train is to sell merchandise. including drinks and box lunches to train passengers, he or she travels down the aisle, carrying such merchandise on a wagon. However, when no salesperson has come nearby, a passenger has to buy any such merchandise at a shop on the train after leaving his or her seat.

Proposed solutions to this problem include, for instance, an in-train sales service system described in the Japanese Patent Application Laid-open No. 2002-215914 (published in the gazette issued on August 2, 2002). This Japanese Patent Application Laid-open No. 2002-215914 discloses the following arrangement.

First, a train passenger accesses a host system from his or her mobile terminal, such as a cellular phone, enters order data (including the train name, seat number, telephone number, merchandise name and quantity), and then the mobile terminal transmits the data to the host system. Having received these order data, the host system transfers the order data to a management terminal installed in the ordering passenger's train. When the management terminal has received the order data, a salesperson delivers the ordered item to the passenger, and then operates the management terminal to convey delivery completion data to the host system. Having received the delivery completion data, the host system processes account settlement for this transaction. Thus, the passenger can have the desired item delivered to his or her seat by ordering it through the mobile terminal.

However, as the passenger accesses the host system from his or her own mobile terminal via the Internet to place an order, there is a problem that the passenger should bear the cost of accessing the Internet every time he or she orders merchandise.

There is another problem that, because the real-time stock volume of every item of merchandise is not displayed on the mobile terminal when an order is placed, the passenger cannot notice how many units of the desired item are available when the item is needed in a large number.

### SUMMARY OF THE INVENTION

An object of the present invention is to provide a sales system, salesmethod, sales management terminal and program using a mobile terminal for solving the problems noted above.

In order to solve those problems, a first sales system utilizing mobile terminals according to the invention comprises user mobile terminals each owned by a train passenger, salesperson terminals each borne by a salesperson in the train, a merchandise management terminal connected to the user mobile terminals and the salesperson terminals via a network in the train, and a merchandise management server to which the merchandise management terminal is connected via the Internet. In this system, the merchandise management terminal has means which, upon receiving ordering information enteredby a passenger using an in-train merchandise purchase program stored in advance in his or her user mobile terminal, discerns the payment method and, if the payment method is cash payment, transfers the ordering information to the salesperson terminal; and means which, if the payment method is any other method than cash payment, requests the merchandise management server to give authentication and, if authentication is given, transfers the ordering information to the salesperson terminal. The merchandise management server has means which, when notified by the salesperson terminal of the completion of a sale via the merchandise management terminal, settles account with the passenger requiring anynon-cashpayment method.

The merchandise management server may further have authenticating means. First, the authenticating means, upon receiving a request for authentication from the merchandise management terminal, checks whether the name and the password contained in the ordering information are identical with the respective ones registered in advance as personal information. Second, the authenticating means discerns whether account settlement information matching the payment method contained in the ordering information is contained in the pertinent personal information. Third, the authenticating means, if both the name and the password are identical and the account settlement information is registered, finalizes authentication.

A second sales system utilizing mobile terminals according to the invention comprises user mobile terminals, each owned by a train passenger; salesperson terminals each borne by a salesperson in the train; a merchandise management terminal connected to the user mobile terminals and the salesperson terminals via a network in the train; and a merchandise management server to which the merchandise management terminal is connected via the Internet. In this system, the user mobile terminal has meanswhich accessesthemerchandise managementserverinadvance, registers personal information, downloads an in-train merchandise purchase programand stores it; means which transmits and receives data to and from the merchandise management terminal by way of short-range wireless communication; means which acquires, at the time of actuating the in-train merchandise purchase program, inventory volume information on each merchandise item from the merchandise management terminal and displays it on an ordering menu screen; and means which causes ordering information on merchandise to be entered by using the in-train merchandise purchase program and transmits the entered ordering information. The salesperson terminal has means which receives the ordering information from the merchandise management terminal and displays it; and means which transmits to the merchandise management terminal ordering information pertaining to already completed delivery after the delivery of merchandise to the passenger and sales completion information entered from the salesperson. The merchandise management terminal has means which manages the inventory volume of each merchandise item; means which transmits inventory volume information on each merchandise item at a request from the user mobile terminal; means which receives ordering information from the user mobile terminal and, if the payment method contained in the ordering information is not cash payment, requests authentication by transmitting the ordering information to the merchandise management server; means which, when notified by the merchandise management server of authentication or in the case of cash payment, transmits the ordering information to the salesperson terminal; and means which receives the ordering information and the sales completion information from the salesperson terminal, updates the inventory volume and, at the same time, transmits the ordering information and the sales completion information to the merchandise management server. The merchandise management server has means which stores personal information registered in advance from the user mobile terminal; means which, when having received a request for authentication from the merchandise management terminal, checks the ordering information with the registered personal information, and notifies the result of checkup for authentication; and means which, when having received the sales completion information and the ordering information from the merchandise management terminal, discerns whether the payment method is cash payment and, when it is any other method than cash payment, settles the pertinent account.

Further, the personal information may include the name, password, and account settlement information on any other payment method than cash payment, and the ordering information may include the name, password, seat number, merchandise item, volume purchased, sum payable and payment method.

The merchandise management server may further have means which, when having received a request for authentication from the merchandise management terminal, checks whether the name and the password contained in the ordering information are identical with the respective ones registered in advance as personal information; discerns whether account settlement information matching the payment method contained in the ordering information is contained in the pertinent personal information and, if both the name and the password are identical and the account settlement information is registered, gives authentication.

Further, the short-range wireless communication may be infrared ray communication, the user mobile terminal having means which performs infrared ray communication with a seat wireless unit provided on each seat in the train, and the seat wireless unit having means which establishes connection to the merchandise management terminal via the network in the train.

Further, the short-range wireless communication may be Bluetooth communication, the user mobile terminal has means which performs Bluetooth communication with Bluetooth wireless units provided in the train, and the Bluetooth wireless units have means which establishes connection to the merchandise management terminal via the network in the train.

The in-train merchandise purchase program stored in the user mobile terminal may further include a plurality of kinds of programs differing in available menus, the merchandise management terminal containing a table of menus in which seat numbers are matched with available menus, and the merchandise management terminal having means which, when the ordering information has been received from the user mobile terminal, judges by referencing the table of menus whether the contents of the menu according to which an order has been received from the seat number contained in the ordering information are approved.

Further, the plurality of kinds of programs may be for first-class cars and for second-class cars.

Also, the plurality of kinds of programs may be for reserved seats and for non-reserved seats.

The available menus may also include a menu for buying merchandise and a menu for using rental service.

A merchandise management terminal according to the invention is for use in a sales system comprising user mobile terminals, eachownedbyatrainpassenger; salespersonterminals each borne by a salesperson in the train; a merchandise management terminal connected to the user mobile terminals and the salesperson terminals via a network in the train; and a merchandise management server to which the merchandise management terminal is connected via the Internet. The merchandise management terminal has means which manages the inventory volume of each merchandise item; means which transmits inventory volume information on each merchandise item at a request from the user mobile terminal; means which receives ordering information from the user mobile terminal and, if the payment method contained in the ordering information is not cash payment, requests authentication by transmitting the ordering information to the merchandise management server; means which, when notified by the merchandise management server of authentication or in the case of cash payment, transmits the ordering information to the salesperson terminal; andmeans which receives the ordering information and the sales completion information from the salesperson terminal, updates the inventory volume and, at the same time, transmits the ordering information and the sales completion information to the merchandise management server.

A sales method according to the invention uses mobile terminals in a sales system comprising user mobile terminals, each owned by a train passenger; salesperson terminals each borne by a salesperson in the train; a merchandise management terminal connected to the user mobile terminals and the salesperson terminals via a network in the train; and a merchandise management server to which the merchandise management terminal is connected via the Internet. It has a step at which the user mobile terminal registers in advance with the merchandise management server personal information including the name, password and account settlement information; a step at which the user mobile terminal in advance downloads an in-train merchandise purchase program from the merchandise management server and stores it; a step at which the user mobile terminal, when the train passenger has actuated the in-train merchandise purchase program on the user mobile terminal, transmits actuation information to the merchandise management terminal; a step at which the merchandise management terminal managing the inventory volume of each merchandise item, upon receiving the actuation information, transmits the current inventory volume information to the user. mobile terminal; a step at which the user mobile terminal displays an ordering menu screen containing the inventory volume of each merchandise item; a step at which'the user mobile terminal, when the passenger enters ordering information on the screen, transmits it to the merchandise management terminal; a step at which the merchandise management terminal discerns whether the payment method contained in the ordering information is cash payment; a step at which the merchandise management terminal, when the payment method is any other method than cash payment, transmits the ordering information to the merchandise management server and requests authentication; a step at which the merchandise management server checks whether account settlement information matching the name, the password and the payment method contained in the ordering information is registered, and transmits the result of checkup for authentication to the merchandise management terminal; a step at which the merchandise management terminal, when notified of authentication or in the case of cash payment, transmits the ordering information to the salesperson terminal; a step at which the salesperson terminal, when the salesperson enters sales completion information indicating the completion of delivery of merchandise to the passenger of the seat number contained in the ordering information, transmits to the merchandise management terminal the entered sales completion information and the ordering information pertaining to the already completed delivery; a step at which the merchandise management terminal receives the sales completion information and the ordering information pertaining to the already completed delivery, updates the inventory volume and at the same time transmits the sales completion information and the ordering information to the merchandise management server; a step at which the merchandise management server discerns whether the payment method contained in the ordering information is cash payment; and a step at which the merchandise management server, when the payment method is any other method than cash payment, settles the pertinent account according to the account settlement information registered correspondingly to the name and the password registered in the ordering information.

A program according to the invention is applicable, in a sales system comprising user mobile terminals, each owned by a train passenger, salesperson terminals each borne by a salesperson in the train, a merchandise management terminal connected to said user mobile terminals and said salesperson terminals via a network in the train, and a merchandise management server to which saidmerchandisemanagement terminal is connected via the Internet, to said merchandise management terminal. This program causes a computer to achieve processing comprising a function to manage the inventory volume of each merchandise item; a function to transmit the inventory volume of each merchandise item at a request from said user mobile terminal; a function to receive ordering information from said user mobile terminal and, if the payment method contained in said ordering information is not cash payment, requests authentication by transmitting said ordering information to saidmerchandise management server; a function to transmit, when notified of authentication by said merchandise management server or in the case of cash payment, said ordering information to said salesperson terminal; and a function to update, upon receiving said ordering information and sales completion information, the inventory volume and at the same time transmit said ordering information and said sales completion information to said merchandise management server as account settling information.

Thus the present invention, according to which an "in-train merchandise purchase program" is downloaded in advance to the user mobile terminal and that program is actuated at the passenger seat in the train to place an order for merchandise, provides the advantage that the user is relieved of the cost of communication when he or she accesses the order taking site on the Internet.

Furthermore the invention, according to which inventory management is performed on a real-time basis and the inventory volume of each merchandise item at the time any passenger places an order is displayed, provides convenience to passengers purchasing a large volume of the same item at a time and enables the passengers to avoid ordering any out-of-stock item.

### BRIEF DESCRIPTION OF THE DRAWINGS

These and other aspects, features and advantages of the present invention will become more apparent from the following detailed description when taken in conjunction with the accompanying drawings. In the drawings:
FIG. 1 is a block diagram illustrating the configuration of a preferred embodiment of the invention;
FIG. 2 is a block diagram illustrating the internal configuration of the wireless mobile terminal shown in FIG. 1;
FIG. 3 is a block diagram illustrating the internal configuration of the salesperson terminal shown in FIG. 1;
FIG. 4 is a block diagram illustrating the internal configuration of the seat wireless unit shown in FIG. 1;
FIG. 5 is a block diagram illustrating the internal configuration of the wireless unit shown in FIG. 1;
FIG. 6 is a block diagram illustrating the internal configuration of the merchandise management terminal shown in FIG. 1;
FIG. 7 is a block diagram illustrating the internal configuration of the merchandise management server shown in FIG. 1;
FIG. 8 is a flow chart showing the operations that take place in the preferred embodiment of the invention when membership registration is to be done for purchasing merchandise aboard a train;
FIG. 9 is a flow chart showing the operations of various terminals and the merchandise management server in the preferred embodiment of the invention when a passenger purchases merchandise aboard a train; and
FIG. 10 illustrates a typical sequence of screens that appear when an order for merchandise is placed.

### DETAILED DESCRIPTION OF THE PREFERRED EMBODIMENT

Next will be described in detail a preferred embodiment of the present invention with reference to the accompanying drawings.

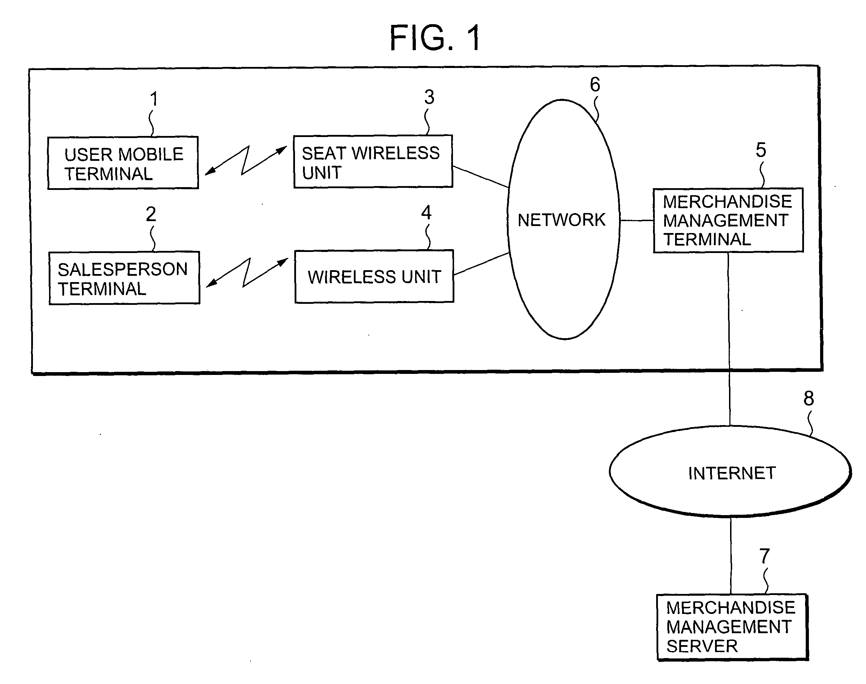

FIG. 1 a block diagram illustrating the configuration of the preferred embodiment of the invention. A sales system in Fig. 1 has a user mobile terminal 1 in a train, a salesperson terminal 2 in the train, a seat wireless unit 3 in the train, a wireless unit 4 in the train, a merchandise management terminal 5 in the train, a network 6 in the train, a merchandise management server 7 arranged outside the train, and the Internet 8 outside the train.

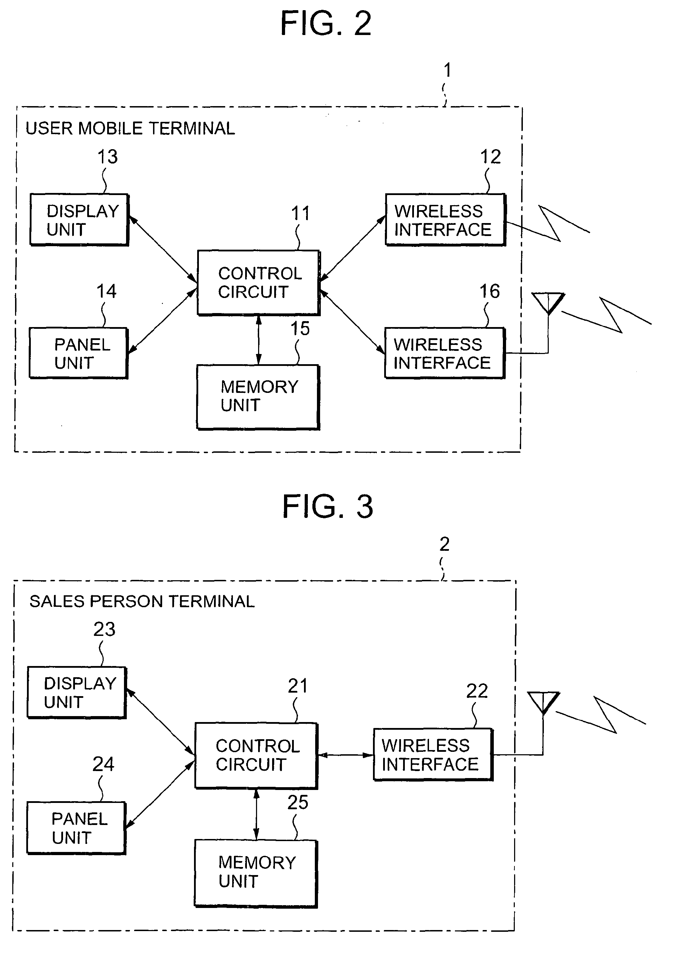

The user mobile terminal 1 of FIG. 1 is a mobile terminal, such as a cellular phone, owned by a passenger in a train. FIG. 2 illustrates an example of configuration of the user mobile terminal 1 of FIG. 1. The user mobile terminal 1 has of a control circuit 11, a wireless interface 12, a wireless interface 16, a display unit 13, a panel unit 14 and a memory unit 15.

The control circuit 11 illustrated in FIG. 2 operates under program control by a central processor unit (CPU; not shown). The control circuit 11 is equipped with a function to perform short-range wireless communication via the wireless interface 12, a function to access a web site on the Internet via the wireless . interface 16, a function to store application programs, which constitute in-train merchandise purchase software, into the memory unit 15, and a function to have inputting and selections done on the screen of the display unit 13 by pressing keys on the panel unit 14. These functions may be either configured of control circuits independent of one another or realized by software.

The interface 12 of FIG. 2 performs infrared communication conforming to the standard of the Infrared Data Association (IrDA) with another device under the control of the control circuit 11. Incidentally, although the following description of the operations of this embodiment refers to the use of infrared communication as short-range wireless communication, the system may as well perform short-range wireless communication conforming to the standard of Bluetooth with another device.

The wireless interface 16 of FIG. 2 communicates with the Internet via a cellular phone network (not shown) under the control of the control circuit 11. The wireless interface 16 may use, for instance, wireless LAN communication conforming to the IEEE 802.11 standard or the like.

The display unit 13 of FIG. 2 displays screen information, character information and the like on its screen under the control of the control circuit 11.

The panel unit 14 of FIG. 2 is mounted with numeric keys, control keys and the like. When the user enters information by manipulating keys thereon, the panel unit 14 sends the entered information to the control circuit 11.

The memory unit 15 of FIG. 2 is a rewritable nonvolatile memory (e.g. a flash memory). In the memory unit 15 are stored various programs to be operated by the control circuit 11. Also stored in the memory unit 15 are various application programs acquired by the control circuit 11 from the merchandise management server 7. The nonvolatile memory may as well be a volatile memory (e.g. a RAM) backed up by a battery.

The salesperson terminal 2 of FIG. 1 is a compact wireless information terminal to be carried by a salesperson who carries on a wagon box lunches, drinks and other items for sale to train passengers. FIG. 3 illustrates an example of configuration of the salesperson terminal 2 of FIG. 1. The salesperson terminal 2 has a control circuit 21, a wireless interface 22, a display unit 23, a panel unit 24 and a memory unit 25.

The control circuit 21 of FIG. 3 operates under program control by a central processor unit (CPU; not shown). The control circuit 21 is provided with a function to have inputting and selections done on the screen of the display unit 23 and a function to transmit and receive information to and from the merchandise management terminal 5 via the wireless unit 4 and the network 6 by using the wireless interface 22. These functions may be either configured of control circuits independent of one another or realized by software.

The interface 22 of FIG. 3 performs wireless LAN communication conforming to the IEEE 802.11 standard with another device under the control of the control circuit 21.

The display unit 23 of FIG. 3 displays screen information, character information and the like on its screen under the control of the control circuit 21.

The panel unit 24 of FIG. 3 is mounted with numeric keys, control keys and the like to enable the user to enter information by manipulating keys on the panel unit 24.

The memory unit 25 of FIG. 3 is a rewritable nonvolatile memory (e.g. a flash memory). In the memory unit 25 are stored various programs to be operated by the control circuit 21. The nonvolatile memory may as well be a volatile memory (e. g. a RAM) backed up by a battery.

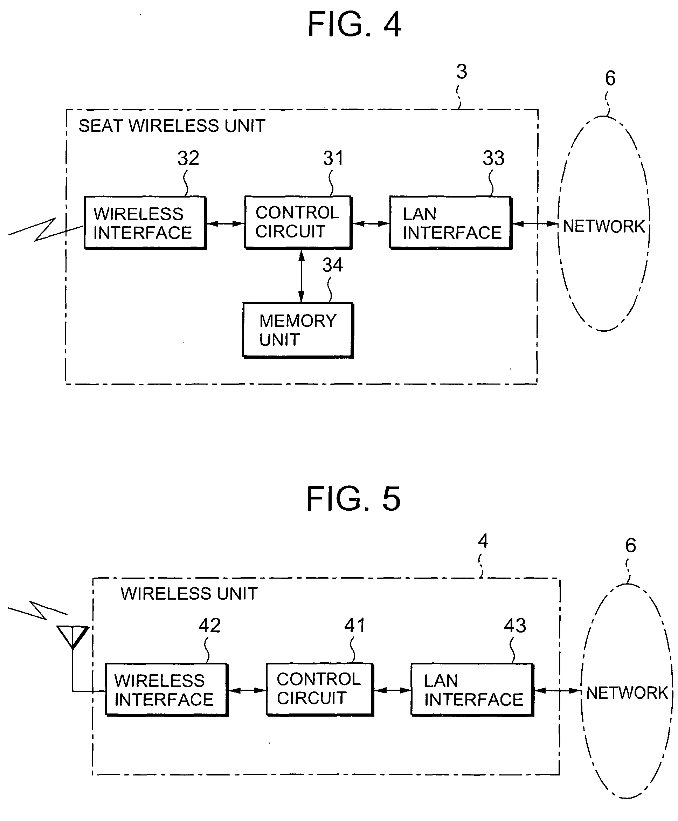

The seat wireless unit 3 of FIG. 1 is a wireless unit installed on each seat in a train (for instance on its armrest) . FIG. 4 shows an example of configuration of the seat wireless unit 3 of FIG. 1. The seat wireless unit 3 has a control circuit 31, a wireless interface 32 and a LAN interface 33.

The control circuit 31 of FIG. 4 operates under program control by a central processor unit (CPU; not shown). The control circuit 31 is provided with a function to enable the wireless interface 32 to perform infrared communication with the user mobile terminal 1 of a seated passenger, a function to transmit, after adding a seat ID (the seat ID number or the like unique to that seat in the train) to information received from the user mobile terminal 1 via the wireless interface 32, that augmented information to the network 6 in the train via the LAN interface 33, and a function to transmit the information received from the network 6 in the train via the LAN interface 33 to the user mobile terminal 1 via the wireless interface 32. These functions may be either configured of control circuits independent of one another or realized by software.

The wireless interface 32 of FIG. 4 performs infrared communication conforming to the standard of IrDA with another device under the control of the control circuit 31.

The LAN interface 33 of FIG. 4 performs communication conforming to the IEEE 802.3 standard with the network 6 in the train under the control of the control circuit 31.

A memory unit 35 in FIG. 4 is a rewritable nonvolatile memory (e.g. a flash memory). In the memory unit 35 are stored various programs to be operated by the control circuit 21 and the seat ID of the user' s own seat. The nonvolatile memory may as well be a volatile memory (e.g. a RAM) backed up by a battery.

The wireless unit 4 of FIG. 1 is one of wireless devices installed in the cars of a train. FIG. 5 shows an example of configuration of the wireless unit 4 of FIG. 1. The wireless unit 4 has a control circuit 41, a wireless interface 42 and a LAN interface 43.

The control circuit 41 of FIG. 5 operates under program control by a central processor unit (CPU; not shown). The control circuit 41 is provided with a function to transmit and receive information to and from the salesperson terminal 2.

The wireless interface 42 of FIG. 5 performs wireless LAN communication conforming to the IEEE 802. 11 standardwith another device under the control of the control circuit 41.

The LAN interface 43 of FIG. 5 performs communication conforming to the IEEE 802.3 standard with the network 6 in the train under the control of the control circuit 41.

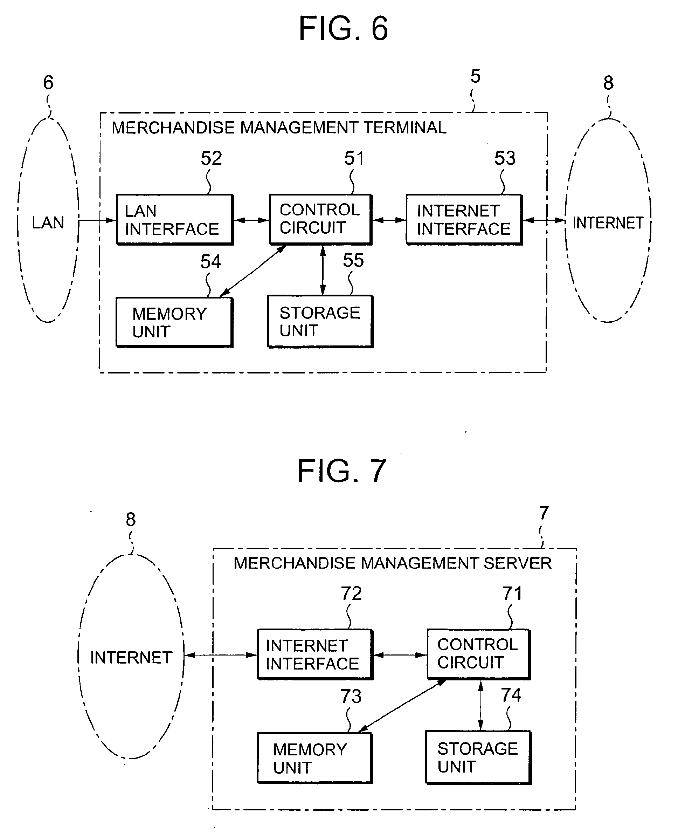

The merchandise management terminal 5 of FIG. 1 is an information processing device, such as a personal computer, a unit of which is installed in each train. FIG. 6 shows an example of configuration of the merchandise management terminal 5 of FIG. 1. The merchandise management terminal 5 has a control circuit 51, a LAN interface 52, an Internet interface 53, a memory unit 54 and a storage unit 55.

The control circuit 51 of FIG. 6 operates under program control by a central processor unit (CPU; not shown). This control circuit 51 of the merchandise management terminal 5 has a function to transmit an authentication request, inventory volume information, sales completion information and the train ID (the ID number of the train of the like) to the merchandise management server 7 via the Internet interface 53, a function to transfer order information, received from the user mobile terminal 1, to the salesperson terminal 2 via the LAN interface 52, and a function to update on a real-time basis inventory volume information on each merchandise item according to sales completion information from the salesperson terminal 2 or by its own inputting operation and to store the updated information into an inventory volume database within the storage unit 55. These functions may be either configured of control circuits independent of one another or realized by software. Incidentally, the control circuit 51 of the merchandise management terminal 5 in a train controls the aforementioned means of the merchandise management terminal 5 by executing programs stored in the memory unit 54.

The LAN interface 52 of FIG. 6 performs communication conforming to the IEEE 802. 11 standard with another device under the control of the control circuit 51.

The Internet interface 53 of FIG. 6 performs communication conforming to the Internet Protocol with another device under the control of the control circuit 51

The memory unit 54 of FIG. 6 is a rewritable volatile memory (e. g. a RAM). In the memory unit 54 are stored various programs which have been developed. Thus, the control circuit 51 executes the programs developed in the memory unit 54.

The storage unit 55 of FIG. 6 is a nonvolatile recording medium device (e.g. a magnetic disk device). Various programs and various items of screen information are stored in the storage unit 55, to which is assigned the inventory volume database. When the merchandise management terminal 5 is actuated or an application program is being used, the pertinent one of the various programs in the storage unit 55 is developed in the memory unit 54.

The network 6 of FIG. 1 is an in-train communication network such as a local area network (LAN). The network 6 in the train connects the seat wireless unit 3, the in-train wireless unit 4 and the merchandise management terminal 5 to one another. Incidentally, this network 6 in the train may be either wired (e.g. conforming to IEEE 802.3) or wireless (e.g. conforming to IEEE 802.11).

The merchandise management server 7 of FIG. 1 is an information processing device (computer) , such as a work station server which the company selling merchandise in trains is equipped with. This merchandise management server 7 offers on the Internet 8 a member registration site for prospective customers wishing to buy merchandise in trains. FIG. 7 shows an example of configuration of the merchandise management server 7 shown in FIG. 1. The merchandise management server 7 has a control circuit 71, an Internet interface 72, a memory unit 73 and a storage unit 74.

The control circuit 71 of FIG. 7 operates under program control by a central processor unit (CPU; not shown). This control circuit 71 of the merchandise management server 7 has a function to distribute an "in-train merchandise purchase program" in response to a download request from the user mobile terminal 1, a function to reference user registration data at the request of the merchandise management terminal 5 and authenticate the pertinent user, a function to judge whether or not account settlement is needed every time sales completion information is received fromthe merchandise management terminal 5 and to settle the account if needed, and a function to update the inventory volumes and sales records for each train and each merchandise item in the internal database in response to information received from the merchandise management terminal 5 in the train. These functions may be either configured of control circuits independent of one another or realized by software.

The Internet interface 72 of FIG. 7 performs communication conforming to the Internet Protocol with another device under the control of the control circuit 71.

The memory unit 73 of FIG. 7 is a rewritable volatile memory (e.g. a RAM). In the memory unit 73 are stored various programs which have been developed. Thus, the control circuit 71 executes the programs developed in the memory unit 73.

The storage unit 74 of FIG. 7 is a nonvolatile recording medium device (e.g. a magnetic disk device) . Various programs and various items of screen information, including menu screen information on the member registration site, are stored in the storage unit 74, to which are allocated a user registration database, an inventory volume database, and a sales information database. In the user registration database are registered as user registration data items of personal information entered by the user at the time of his or her registration as member (including name, contact address, password and account settlement information). When the merchandise management server 7 itself is actuated or an application program is being used, the pertinent one of the programs in the storage unit 74 is developed in the memory unit 73.

The Internet 8 is a communication network connecting the merchandise management terminal 5 and the merchandise management server 7 to each other.

Next will be described the operations of one preferred embodiment of the present invention with reference to the accompanying drawings.

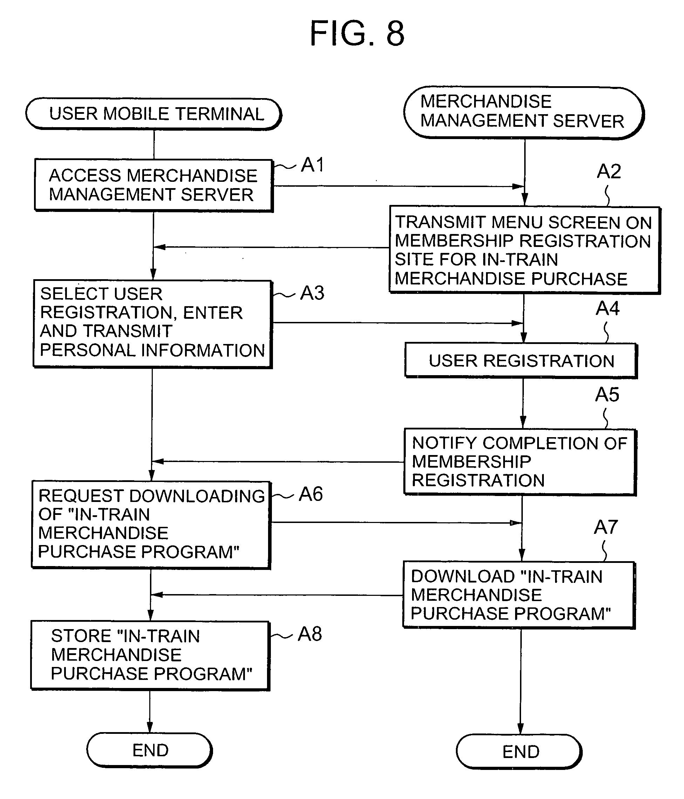

To begin with, the operation at the time of membership registration for purchasing merchandise in a train in the preferred embodiment of the invention will be described with reference to FIG. 1 through FIG. 7 and FIG. 8. Incidentally, Fig. 8 is a flow chart showing the operations that take place in this embodiment of the invention when membership registration is to be done for purchasing merchandise in a train.

First, the user operates the panel unit 14 of the user mobile terminal 1 to set the uniform resource locator (URL) of themembership registration site as the destination of connection. Then, the control circuit 11 of the usermobile terminal 1 receives that URL information from the panel unit 14, and on the basis of that URL information accesses via the wireless interface 12 a membership registration site provided by the merchandise management server 7 on the Internet 8 (step A1 in FIG. 8). Being accessed via the Internet interface 72, the control circuit 71 of the merchandise management server 7 reads out menu screen information on the membership registration site stored in the storage unit 74. Further, the control circuit 71 transmits to the user mobile terminal 1 the menu screen information it has read out step A2).

The control circuit 11 of the user mobile terminal 1, having received the menu screen information on the membership registration site via the wireless interface 12, causes that menu screen information to be displayed on the display unit 13. The user selects the user registration item displayed in the screen on the display unit 13 of the user mobile terminal 1 and enters personal information. This causes the control circuit 11 to transmit to the merchandise management server 7 via the wireless interface 12 the personal information entered from the panel unit 14 (step A3). The items of personal information then transmitted include the user's name, contact address (such as the mail address or telephone number), password and information on any other method of account settlement than cash payment (such as the bank account number for automatic transfer, the server address of that bank, cellular telephone number, the billing server address of the cellular telephone company and the user' s credit card number).

The control circuit 71 of themerchandisemanagement server 7 having received the personal information via the Internet interface 72 registers the received personal information as user registration data into a user registration database in the storage unit 74 (step A4). Further, the control circuit 71 reads out of the storage unit 74 screen information for downloading the "in-train merchandise purchase program", adds information indicating completion of the registration of personal information to that read-out screen information, and transmits the augmented information to the user mobile terminal 1 via the Internet interface 72 (step A5).

The user mobile terminal 1, having received the screen information for downloading the "in-train merchandise purchase program" via the wireless interface 12 causes the display unit 13 to display the screen information for downloading. When the user selects a request to download the "in-train merchandise purchase program" from the panel unit 14 in response to the screen on the display unit 13 of the user mobile terminal 1 (step A6), the control circuit 11 notifies the merchandisemanagement server 7 via the wireless interface 16 of the selection of the "in-train merchandise purchase program". The control circuit 71 of the merchandise management server 7 so notified via the Internet interface 72 reads out the "in-train merchandise purchase program" stored in the storage unit 74, and downloads it to the user mobile terminal 1 via the Internet interface 72 (step A7). The control circuit 11 of the user mobile terminal 1 having received the "in-train merchandise purchase program" via the wireless interface 12 stores the received "in-train merchandise purchase program" into the memory unit 15 (step A8).

Incidentally, the "in-train merchandise purchase program", which is an application program to be used by a passenger to order merchandise in a train from his or her user mobile terminal 1, is enabled to control operations at the time of order placement by being actuated by the passenger from the user mobile terminal 1.

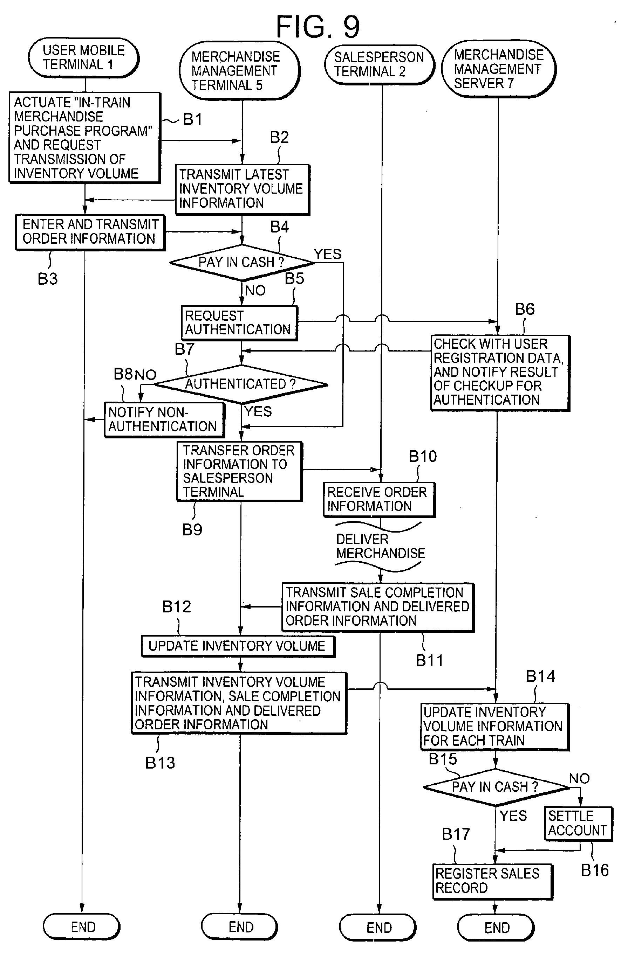

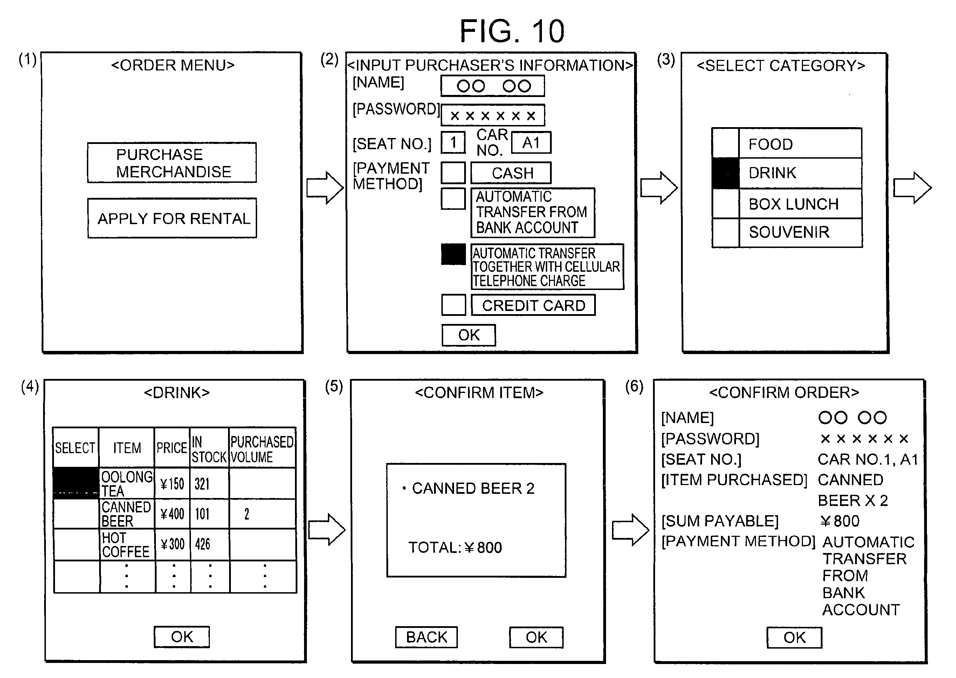

Next will be described the operations to purchase merchandise in a train in the preferred embodiment of the invention with reference to FIG. 1 through FIG. 7, FIG. 9 and FIG. 10. Incidentally, FIG. 9 is a flow chart showing the operations of various terminals and the merchandise management server in the embodiment of the invention when a passenger purchases merchandise in a train, and FIG. 10 illustrates a typical sequence of screens that appear when an order for merchandise is placed.

Now, a passenger seated in a train and wishing to buy some merchandise actuates from the panel unit 14 of the user mobile terminal 1 the "in-train merchandise purchase program" stored in the memory unit 15 in advance. When the "in-train merchandise purchase program" is actuated, the control circuit 11 of the usermobile terminal 1 transmits actuation information (a command requesting transmission of inventory volume information) to the seat wireless unit 3 via the wireless interface 53. The control circuit 31 of the seat wireless unit 3, upon receiving actuation information by infrared ray communication via the wireless interface 32, reads out the seat ID of its own seat from a memory unit 34. Further, the control circuit 31 adds to the received actuation information the read-out seat ID of its own seat, and transmits the augmented information to the merchandise management terminal 5 in the train via the LAN interface 33 (step B1 in FIG. 9).

The control circuit 51 of the merchandise management terminal 5, having received the information via the LAN interface 52, references the inventory volume database in the storage unit 55 and extracts current inventory volume information on every merchandise item. Further, the control circuit 51 transmits the extracted inventory volume information to the seat wireless unit 3, the origin of transmission, via the LAN interface 52. The control circuit 31 of the seat wireless unit 3, having received the inventory volume information via the LAN interface 33, transmits the inventory volume information by infrared ray communication via the wireless interface 32 to the user mobile terminal 1, the source of the request (step B2).

The control circuit 11 of the user mobile terminal 1 during the active period of the "in-train merchandise purchase program", when it receives inventory volume information via the wireless interface 12, adds the received inventory volume to the merchandise list contained in its own program. Further, the control circuit 11 causes the display unit 13 to display ordering menu screen information appended to the merchandise list on its screen. When the user manipulates keys on the panel unit 14 to enter ordering information for buying the merchandise on the screen, the control circuit 11 transmits the entered ordering information to the seat wireless unit 3 via the wireless interface 12. Then, the control circuit 31 of the seat wireless unit having received the ordering information via the wireless interface 32 transmits it to the merchandise management terminal 5 in the train via the LAN interface 33 (step B3).

Now will be described an example of inputting of ordering information at step B3 with reference to FIG. 10.

Referring to FIG. 10, first an ordering menu screen as shown in FIG. 10 (1) is displayed on the display unit 13 of the user mobile terminal 1. When the passenger selects on the screen "PURCHASE MERCHANDISE", purchaser's information input screen information as shown in FIG. 10 (2) is displayed on the screen of the display unit 13. In accordance with the displayed purchaser's information input screen, the passenger enters his or her name and password, together with the seat number and payment method, all user-registered in advance with the merchandise management server 7 . The payment method in this case is selected out of "CASH", "AUTOMATIC TRANSFER FROM BANKACCOUNT", "AUTOMATIC TRANSFER TOGETHER WITH CELLULAR TELEPHONE CHARGE", "CREDIT CARD" and any other options, if available. Account settlement information matching each of these payment methods is user-registered in advance with the merchandise management server 7 as stated above. Having entered all these items, the passenger presses an OK button on the screen of the panel unit 14.

The pressing of the OK button by the passenger causes the screen on the display unit 13 to shift from the purchaser's information input screen to a merchandise category selection screen. Thus, as the control circuit 11 displays merchandise categories on the display unit 13 as shown in FIG. 10 (3), the passenger selects on the screen the category he or she wants. If, by way of example, the passenger selects "DRINK", the control circuit 11 displays items that fall under the drink category on the display unit 13 as shown in FIG. 10 (4). The displayed information covers the merchandise items (such as hot coffee and oolong tea), their respective prices and inventory volumes. The inventory volume is the currently available volume of each item under the management of the merchandise management terminal 5. Displaying of this information enables the prospective purchaser not only to avoid choosing any item out of stock but also to know how large the inventory volume is when he or she wants to buy many units. The passenger selects what is desired to buy out of the displayed merchandise list, enters the number of units to be bought, and presses the OK button on the screen. Then, the display unit 13 displays a message "DO YOU BUY MORE?", and the passenger selects "YES" if he or she does or "NO" if not. If the answer is "YES", the control circuit 11 will then cause the display unit 13 to display "CATEGORY SELECTION screen information" on its screen to enable the passenger to select merchandise. If the answer is "NO", the control circuit 11 ends merchandise selection, and causes the display unit 13 to display merchandise confirmation screen information as shown in FIG. 10 (5). If the passenger presses the OK button on the screen, finally the hitherto entered ordering information (purchaser's information and particulars of the merchandise) is shown as an "ORDER CONFIRMATION screen" as shown in FIG. 10 (6). As the passenger selects the OK button on the screen, the merchandise ordering procedure is completed.

Referring back to FIG. 9, description of the process will continue from step B4 onward.

Having received the ordering information (name, password, seat number, merchandise item purchased, sum payable and payment method), the control circuit 51 of the merchandise management terminal 5 confirms the payment method contained in the ordering information (step B4). If the payment method is cash payment (the passenger pays the price in cash upon delivery of the merchandise to the seat), there will be no need for account settlement by the merchandise management server 7, but any other method than cash payment (such as automatic transfer from bank account, automatic transfer together with cellular telephone charge, credit card or the like) would require account settlement by the merchandise management server 7, and there would be alternative steps next.

If the payment is made by cash, the control circuit 51 will proceed to step B9. For any other method than cash payment, the control circuit 51 adds the train ID to the ordering information. Further, the control circuit 51 transmits the augmented ordering information to the merchandise management server 7 via the Internet interface 53 and requests authentication (step B5).

Requested via the Internet interface 72 for authentication, the control circuit 71 of the merchandise management server 7 checks whether or not the name and the password are identical with their respective counterparts registered with the user registration database in the storage 74 and, if the payment method is, for instance, an automatic transfer from bank account, also checks whether the user's account settlement information including the bank account number is registered as user registration data. Further, the control circuit notifies the merchandise management terminal 5 in the train of the result of check-up for authentication, including the checkup of account settlement information (step B6).

The control circuit 51 of the merchandise management terminal 5 in the train receives via the Internet interface 53 the result of check-up for authentication (that the name and the password are identical as the registered and account settlement information relevant to the payment method is registered) (step B7). If the check-up does not result in authentication, the control circuit 51 of the merchandise management terminal 5 notifies the user mobile terminal 1 of non-authentication (i.e. neither the name nor the password is user-registered, no account settlement information relevant to the payment method is user-registered, and.so on) and ends processing (step B8).

If authentication is given at step B7 or cash payment is affirmed at step B4, the control circuit 51 of the merchandise management terminal 5 will transmit the ordering information to the salesperson terminal 2 via the LAN interface 52, the network 6 and the wireless unit 4 (step 89). Upon receiving the ordering information via the wireless interface 22 (step B10), the control circuit 21 of the salesperson terminal 2 notifies the salesperson engaged in wagon service or the like by sounding an alarm or otherwise. The notified salesperson confirms with the display unit 23 the particulars of the ordered merchandise, the passenger's seat number and payment method contained in the ordering information, and delivers the merchandise to the passenger.

Then, if the passenger wants to pay in cash, the merchandise will be delivered against the payment or, if the passenger is to pay by any other method, only the merchandise will be delivered.

When the salesperson, after delivering the merchandise to the passenger, presses "DELIVERED" button on the ordering information screen displayed on the display unit 23 of the salesperson terminal 2, the control circuit 21 will transmit it, together with sale completion information added to the ordering information, to the in-train merchandise management terminal 5 via the wireless interface 22, the in-train wireless unit 4 and the in-train network 6 (step B11). The merchandise management terminal 5, having received the sale completion information and the ordering information via the LAN interface 52, acquires the merchandise item and sold volume contained in the ordering information, and updates the inventory volume database in the storage unit 55. In this case, the sold volume is subtracted from the inventory volume of the pertinent merchandise in the inventory volume database. The current inventory of each merchandise item is thereby updated on a real-time basis, enabling the passenger to place an order while referencing the inventory volume at the time of ordering (step B12).

Next, the control circuit 51 of the merchandise management terminal 5 in the train adds the train ID to the sale completion information, the ordering information and the updated inventory volume information, and transmits the augmented information to the merchandise management server 7 via the Internet interface 53 (step B13). The control circuit 71 of the merchandise management server 7 updates the inventory volume for each train and each merchandise item stored in the inventory volume database within the storage 74 according to the inventory volume information and the train ID received via the Internet interface 72 (step B14).

Next, the control circuit 71 of the merchandise management server 7 checks whether or not the payment method contained in the ordering information is cash payment (step B15). If it is cash payment, the process goes ahead to step B17. If it is not cash payment, the control circuit 71 of the merchandise management server 7 acquires from the user registration database in the storage 74 the account settlement information registered correspondingly to the name and the password contained in the ordering information. If the payment method is, for instance, automatic transfer from the bank account, the control circuit 71 acquires account settlement information including the server address of the pertinent bank and the pertinent account number, and asks the bank' s server for a transfer from the user' s account to the seller' s account via the Internet interface 72 (step B16). Also, the control circuit 71 of the merchandise management server 7 adds the day and hours of the sale on the basis of the merchandise item and volume contained in the ordering information and the train ID, and stores the augmented information into the sales database of the storage unit 74 as a sales record of the pertinent train (step B17).

As described above, according to the present invention, account settlement after the delivery of the merchandise not paid for in cash involves no problem because, at the time of orderplacementbyapassenger, themerchandisemanagement server 7 checks whether or not the passenger is the very person registered as an authorized user and whether or not his or her account settlement information is registered. Moreover, since inventory volume and sales record information sent from the merchandise management terminal 5 of every train is collected by the merchandise management server 7, these items of information can be effectively utilized for replenishing the merchandise stock and sales planning.

While the preferred embodiment of the invention so far described presupposes that no salesperson is on a sales circuit using a wagon to provide against too great a rush of orders for the sales crew to properly serve, such a rush can as well be coped with by increasing the number of salespersons and apply this system during the periods when no salesperson is on the circuit. In this way of application, when the passenger has actuated the "in-train merchandise purchase program", the merchandise management terminal 5 in the train transmits, together with inventory volume information, information on the circuit sales periods to the user mobile terminal 1. Then, the user mobile terminal 1 will display the circuit sales periods on the ordering menu screen. When, in one of these circuit sales periods, the passenger wants to make a purchase, it is preferable for the user mobile terminal 1 to display on the display unit 13 a request for the use of circuit sales.

Further, whereas the merchandise management terminal 5 in the train updates the inventory volume on a real-time basis every time a sale to meet an order from the user mobile terminal 1 is completed in the embodiment of the invention described above, supplementary explanation will be made below on the updating and management of the inventory volume. Conceivable cases in which updating andmanagement are required include replenishment of the stock or sale during a wagon circuit, for instance. In the former case, a salesperson directly enters the merchandise item and the added volume into the merchandise management terminal 5 in the train, or a salesperson enters the merchandise item and the added volume into the salesperson terminal 2 and transmits the entered information to the merchandise management terminal 5. In response to that, the merchandise management terminal 5 updates the inventory volume information in the inventory volume database. The updated inventory volume information is transmitted from the merchandise management terminal 5 to the merchandise management server 7. Then, during a wagon circuit, when the salesperson presses the sale start button on the salesperson terminal 2, the salesperson terminal 2 transmits sale start information to the merchandise management terminal 5. After that, the salesperson enters the merchandise item and sold volume every time he or she sells merchandise, the merchandise. item and sold volume are transmitted from the salesperson terminal 2 to the merchandise management terminal 5, and the merchandise management terminal 5 updates the inventory volume on a real-time basis. When the salesperson presses the sale end button at the end of the sale, the salesperson terminal 2 transmits sale end information to the merchandise management terminal 5. Having received the sale end information, the merchandise management terminal 5 transmits to the merchandise management server 7 the merchandise items and sold volumes received since the start and the end of the sale, together with inventory volume information.

Although the foregoing description of the preferred embodiment of the invention presupposes the advance downloading of the "in-train merchandise purchase program" from the merchandise management server 7 to the user mobile terminal 1, it is also conceivable to preinstall the "in-train merchandise purchase program" in the memory unit 15 of the user mobile terminal 1 at the time of selling the user mobile terminal 1, and in this way this system can be differentiated from like products of other manufacturers.

In the embodiment described above, the passenger is supposed to enter his or her seat number on the ordering information input screen shown in FIG. 10 (2), but it is also possible for the passenger to delete the seat number item from the ordering information input screen information. In this case, when the user mobile terminal 1 transmits ordering information to the merchandise management terminal 5 in the train via the seat wireless unit at step B3 in FIG. 9, the seat wireless unit 3 adds the seat ID to the information to be transmitted. Then, the merchandise management terminal 5 in the train acquires the seat number from the received seat ID by referencing a seat-relevant database in the storage unit 55, and adds it to the ordering information. For this seat-relevant database are stored in the storage unit 55 in advance the data indicating the correspondence between seat IDs and seat numbers of the pertinent train.

While the foregoing description of the embodiment supposes short-range wireless communication using infrared rays between the user mobile terminal 1 and the seat wireless unit 3, Bluetooth can as well be used instead of infrared ray communication by the user mobile terminal 1. In this case, the user mobile terminal 1 is provided with a function for Bluetooth communication, and Bluetooth wireless units (base stations), instead of seat wireless units 3, are installed in the train at short enough intervals to permit communication with the user mobile terminals or terminal 1 of each train or each seat.

In the embodiment described above, there is supposed to be only one kind of "in-train merchandise purchase program" without differentiating between first-class and second-class cars of a train, but different versions of the program can be used for first-class and second-class cars or between reserved and non-reserved seats. For instance a "merchandise purchase program for second-class car" and a "merchandise purchase program for first-class car" can be prepared and stored in advance in the memory unit 15 of the user mobile terminal 1. A user seated in a second-class car would actuate the "merchandise purchase program for second-class car" to place an order, and one seated in a first-class car would actuate the "merchandise purchase program for first-class car" for the same purpose. For instance, the "merchandise purchase program for second-class car" could have only a menu for buying merchandise, while the "merchandise purchase program for first-class car" could also have a menu for using rental service (of a game machine, a CD or DVD player, and the like) in addition to the menu for buying merchandise. The merchandise management terminal 5 could have a function to determine, upon receiving an order from a passenger, whether he or she is riding the first class or the second class from the seat number, and whether or not the menu according to which the order is to be placed is permitted to the occupant of that seat by referencing a table of menus offered in second-class and first-class cars stored in the storage unit 55. In this way, the present invention could contribute to raising the load factor of first-class cars.

## Claims

1. A sales system comprising user mobile terminals, each owned by a train passenger, for storing an in-train merchandise purchase program; salesperson terminals each borne by a salesperson in the train; a merchandise management terminal connected to said user mobile terminals and said salesperson terminals via a network in the train; and amerchandise management server to which said merchandise management terminal is connected via the Internet; wherein:
said merchandise management terminal has:
means , upon receiving ordering information entered from said user mobile terminal in accordance with said in-train merchandise purchase program, for discerning the payment method and, for transferring said ordering information to said salesperson terminal if the payment method is cash payment; and
means, for requesting said merchandise management server to give authentication if the payment method is any other method than cash payment and, for transferring said ordering information to said salesperson terminal if authentication is given; and
said merchandise management server has means for settling account with the passenger requiring any non-cash payment method when notified by said salesperson terminal of the completion of a sale via said merchandise management terminal.

2. The sales system, as claimed in Claim 1, wherein said merchandise management server has authenticating means , upon receiving a request for authentication from said merchandise management terminal, for checking whether the name and the password contained in said ordering information are identical with the respective ones registered in advance as personal information; for discerning whether account settlement information matching the payment method contained in said ordering information is contained in the pertinent personal information and, for giving authentication if both the name and thepasswordare identical and the account settlement information is registered.

3. A sales system comprising user mobile terminals, each owned by a train passenger; salesperson terminals each borne by a salesperson in the train; a merchandise management terminal connected to said user mobile terminals and said salesperson terminals via a network in the train; and a merchandise management server to which said merchandise management terminal is connected via the Internet; wherein:
said user mobile terminal has:
means for accessing said merchandise management server in advance, for registering personal information, for downloading an in-train merchandise purchase program and for storing it;
means for transmitting and receiving data to and from said merchandise management terminal by way of short-range wireless communication;
means , at the time of actuating said in-train merchandise purchase program, for acquiring inventory volume information on each merchandise item from said merchandise management terminal and for displaying it on an ordering menu screen; and
means for causing ordering information on merchandise to be entered by using said in-train merchandise purchase program and for transmitting the entered ordering information;
said salesperson terminal has:
means for receiving the ordering information from said merchandise management terminal and for displaying it; and
means for transmitting to said merchandise management terminal ordering information pertaining to already completed delivery after the delivery of merchandise to the passenger and sale completion information entered from the salesperson;
said merchandise management terminal has:
means formanagingthe inventoryvolume of eachmerchandise item;
means for transmitting inventory volume information on eachmerchandise item at a request from said usermobile terminal;
means for receiving ordering information from said user mobile terminal and, for requesting authentication by transmitting said ordering information to said merchandise management server if the payment method contained in said ordering information is not cash payment;
means,when notified bysaid merchandise managementserver of authentication or in the case of cash payment, for transmitting said ordering information to said salesperson terminal; and
means for receiving said ordering information and said sale completion information from said salesperson terminal, for updating the inventory volume and, at the same time, for transmitting said ordering information and said sale completion information to said merchandise management server; and
said merchandise management server has:
means for storing personal information registered in advance from said user mobile terminal;
means , when having received a request for authentication from said merchandise management terminal, for checking said ordering information with said registered personal information, and for notifying the result of checkup for authentication; and
means , when having received said sale completion information and said ordering information from said merchandise management terminal, for discerning whether the payment method is cash payment and, for settling the pertinent account when it is any other method than cash payment.

4. The sales system, as claimed in Claim 3, wherein said personal information includes the name, password, and account settlement information on any other payment method than cash payment, and
said ordering information includes the name, password, seat number, merchandise item, volume purchased, sum payable and payment method.

5. The sales system, as claimed in Claim 3, wherein said merchandise management server further has means, when having received a request for authentication from said merchandise management terminal, for checking whether the name and the password contained in said ordering information are identical with the respective ones registered in advance as personal information; for discerning whether account settlement information matching the payment method contained in said ordering information is contained in the pertinent personal information and, for giving authentication if both the name and the password areidenticalandthe account settlement information is registered.

6. The sales system, as claimed in Claim 3, wherein said short-range wireless communication is infrared ray communication,
saidusermobile terminal has means for performing infrared ray communication with a seat wireless unit provided on each seat in the train, and
said seat wireless unit has means for establishing connection to said merchandise management terminal via said network in the train.

7. The sales system, as claimed in Claim 3, wherein said short-range wireless communication is Bluetooth communication,
said user mobile terminal has means for performing Bluetooth communication with Bluetooth wireless units provided in the train, and
said Bluetooth wireless units have means for establishing connection to said merchandise management terminal via said network in the train.

8. The sales system, as claimed in Claim 3, wherein the in-train merchandise purchase program stored in said user mobile terminal includes a plurality of kinds of programs differing in available menus,
said merchandise management terminal contains a table of menus in which seat numbers are matched with available menus, and
said merchandise management terminal has means , when said ordering information has been received from said user mobile terminal, for judging by referencing said table of menus whether the contents of the menu according to which an order has been received from the seat number contained in said ordering information are approved.

9. The sales system, as claimed in Claim 8, wherein said plurality of kinds of programs are for .first-class cars and for second-class cars.

10. The sales system, as claimed in Claim 8, wherein said plurality of kinds of programs are for reserved seats and for non-reserved seats.

11. The sales system, as claimed in Claim 8, wherein said available menus include a menu for buying merchandise and a menu for using rental service.

12. A merchandise management terminal in a sales system comprising user mobile terminals, each owned by a train passenger; salesperson terminals each borne by a salesperson in the train; a merchandise management terminal connected to said user mobile terminals and said salesperson terminals via a network in the train; and a merchandise management server to which said merchandise management terminal is connected via the Internet; wherein:
said merchandise management terminal has:
means formanaging the inventoryvolume of eachmerchandise item; means for transmitting inventory volume information on each merchandise item at a request from said user mobile terminal; means for receiving ordering information from said user mobile terminal and, for requesting authentication by transmitting said ordering information to said merchandise management server if the payment method contained in said ordering information is not cash payment; means for transmitting said ordering information to said salesperson terminal when notified by said merchandise management server of authentication or in the case of cash payment; and means for receiving said ordering information and said sale completion information from said salesperson terminal, for updating the inventory volume and, for transmitting said ordering information and said sale completion information to said merchandise management server at the same time.

13. A sales method for use in a sales system comprising user mobile terminals, each owned by a train passenger; salesperson terminals each borne by a salesperson in the train; a merchandise management terminal connected to said user mobile terminals and said salesperson terminals via a network in the train; and a merchandise management server to which said merchandise management terminal is connected via the Internet; comprising:
registering in advance with said merchandise management server personal information including the name, password and account settlement information by said user mobile terminal;
downloading an in-train merchandise purchase program from saidmerchandise management server and storing it in advance in said user mobile terminal;
transmitting actuation information from said user mobile terminal to said merchandise management terminal when the train passenger has actuated said in-train merchandise purchase program on said user mobile terminal;
transmitting the current inventory volume information from said merchandise management terminal to said user mobile terminal when said merchandise management terminal managing the inventory volume of each merchandise item receives said actuation information;
displaying an ordering menu screen containing the inventory volume of each merchandise item by said user mobile terminal;
transmitting ordering information from said user mobile terminal to said merchandise management terminal when the passenger enters ordering information on the screen;
discerning by said merchandise management terminal whether the payment method contained in said ordering information is cash payment;
transmitting said ordering information from said merchandise management terminal to said merchandise management server and requests authentication when the payment method is any other method than cash payment;
checking by said merchandise management server whether account settlement information matching the name, the password and the payment method contained in said ordering information is registered and transmitting the result of checkup for authentication from said merchandise management server to said merchandise management terminal;
transmitting said ordering information from said merchandise management terminal to said salesperson terminal when notified of authentication or in the case of cash payment;
transmitting from said salesperson terminal to said merchandise management terminal the entered sale completion information and the ordering information pertaining to the already completed delivery when the salesperson enters sale completion information indicating the completion of delivery of merchandise to the passenger of the seat number contained in said ordering information;
transmitting said sale completion information and said ordering information from said merchandise management terminal to said merchandise management server when said merchandise management terminal receives said sale completion information and said ordering information pertaining to the already completed delivery, updates the inventory volume and at the same time;
discerning by said merchandise management server whether the payment method contained in said ordering information is cash payment; and
settling the pertinent account according to the account settlement information registered correspondingly to the name and the password registered in said ordering information by said merchandise management server when the payment method is any other method than cash payment.

14. A program applicable, in a sales system comprising user mobile terminals, each owned by a train passenger, salesperson terminals each borne by a salesperson in the train, a merchandise management terminal connected to said user mobile terminals and said salesperson terminals via a network in the train, and a merchandise management server to which said merchandise management terminal is connected via the Internet, to said merchandise management terminal to cause a computer to achieve processing, said processing comprising:
managing the inventory volume of each merchandise item;
transmitting the inventory volume of each merchandise item at a request from said user mobile terminal;
receiving ordering information from said user mobile terminal and, if the payment method contained in said ordering information is not cash payment, requests authentication by transmitting said ordering information to said merchandise management server;
transmitting, when notified of authentication by said merchandise management server or in the case of cash payment, said ordering information to said salesperson terminal; and
updating, upon receiving said ordering information and sale completion information, the inventory volume and transmitting at the same time said ordering information and said sale completion information to said merchandise management server as account settling information.
